# EUROPÄISCHE PATENTSCHRIFT

(11) **EP 3 323 699 B1**
(45) Veröffentlichungstag und Bekanntmachung des Hinweises auf die Patenterteilung: **31.07.2019**
(21) Anmeldenummer: 17199666.3
(22) Anmeldetag: 02.11.2017
(51) Int. Cl.: B62D 33/06, B60G 99/00, B60G 17/0165, B60G 17/016, B60G 23/00

(54) **VERFAHREN UND VORRICHTUNG ZUR STEUERUNG ODER REGELUNG EINER FAHRERHAUSLAGERUNG EINES KRAFTFAHRZEUGS**
METHOD AND DEVICE FOR CONTROLLING OR REGULATING A CAB SUSPENSION OF A MOTOR VEHICLE
PROCÉDÉ ET DISPOSITIF DE COMMANDE OU RÉGLAGE DE SUSPENSION DE CABINE D'UN VÉHICULE AUTOMOBILE

(30) Priorität: 17.11.2016 DE 102016013703
(43) Veröffentlichungstag der Anmeldung: 23.05.2018
(73) Patentinhaber: MAN Truck & Bus SE, 80995 München (DE)
(72) Erfinder: Gerritzen, Ralph, 82110 Germering (DE); Mendler, Hardy, 85221 Dachau (DE)
(74) Vertreter: v. Bezold & Partner Patentanwälte - PartG mbB

(56) Entgegenhaltungen:
- EP-A1- 3 090 890
- DE-A1-102007 050 170
- DE-A1-102014 010 577
- DE-A1-102014 109 593
- US-A- 4 924 392
- US-A- 6 073 066
- US-A1- 2010 147 640
- US-A1- 2014 288 776

## Beschreibung

Die Erfindung betrifft ein Verfahren zur Steuerung oder Regelung einer Fahrerhauslagerung eines Kraftfahrzeugs, insbesondere eines Nutzfahrzeugs. Die Erfindung betrifft ferner eine Vorrichtung zur Steuerung oder Regelung einer Fahrerhauslagerung eines Kraftfahrzeugs.

Bei der Auslegung von Fahrwerkregelsystemen ist stets ein Kompromiss notwendig zwischen Komfort und Fahrsicherheit. Ein ideales Fahrwerk soll die durch Fahrbahnunebenheiten angeregten Schwingungen möglichst gut dämpfen und gleichzeitig die Radaufstandskräfte möglichst konstant auf einem vorgegebenen Wert halten, weil hierdurch die Räder das höchste Längs- und Seitenführungspotential haben, und das Fahrzeug mit optimaler Sicherheit führen.

Die gegenwärtig vorhandenen Dämpfersysteme in Fahrzeugen sind in drei Gruppen einteilbar: passive, semiaktive und aktive Dämpfersysteme. Bei passiven Dämpfersystemen sind die Größe und die Richtung der von dem Dämpfer ausgeübten Kraft in der Regel nur abhängig von der relativen Geschwindigkeit des Dämpfers. Es sind jedoch auch positionsabhängige Dämpfer bekannt, z. B. sog. Nutdämpfer. In passiven Dämpfersystemen ist eine Veränderung der Dämpferkraftkennlinie während des Fahrbetriebes nicht vorgesehen. Die Abstimmung eines Fahrzeugs mit passiven Stoßdämpfern stellt immer nur einen Kompromiss dar, da unterschiedliche Fahrzustände mit derselben Fahrwerkseinstellung abgedeckt werden müssen.

Eine Lösung für diesen Zielkonflikt besteht im Einsatz semiaktiver Stoßdämpfer, die es ermöglichen, die Dämpferkennlinien über einen weiten Bereich per elektronischer Ansteuerung zu verändern und damit für unterschiedliche Fahrsituationen innerhalb weniger Millisekunden eine optimale Dämpfereinstellung bereitzustellen. Aber auch für unterschiedliche Beladungszustände, die insbesondere im Nutzfahrzeug große Unterschiede bezüglich Gesamtmasse und Schwerpunktslage bewirken können, können geeignete Dämpfervoreinstellungen gewählt werden, die einer einzigen Abstimmung passiver Dämpfer überlegen sind.

Bei semiaktiven Dämpfersystemen kann deren Kennlinie während der Fahrt schnell und über einen weiten Bereich verändert werden. Insbesondere können solche Stoßdämpfer auf (proportionalen) Verstellventilen beruhen, die den Ölfluss verändern, oder auf magneto- oder elektrorheologischen Flüssigkeiten, wobei ein magnetisches oder elektrisches Feld die Viskosität der Flüssigkeit und damit die Dämpfkraft beeinflusst. Es sind auch Kombinationen der Technologien aus der Praxis bekannt. Auf diese Art und Weise können verschiedene Regelungsprogramme mittels eines Stellelementes in Abhängigkeit von der aktuellen Fahrsituation die optimale Dämpferkraft einstellen.

Bei aktiven Dämpfersystemen wird über einen Aktuator die gewünschte Kraft in jeglicher Richtung bereitgestellt, unabhängig von der relativen Geschwindigkeit des Dämpfers.

Die vorgenannten Dämpfersysteme sind nicht nur zur Fahrwerkslagerung, sondern auch zur dämpfenden Lagerung eines Fahrerhauses (auch als Fahrerkabine bezeichnet) bekannt. Gattungsgemäße Fahrerhauslagerungen, d. h. Aufhängungseinrichtungen zur federnden/dämpfenden Aufhängung einer Fahrerkabine eines Kraftfahrzeugs relativ zum Fahrzeugchassis, kommen beispielsweise, jedoch keineswegs ausschließlich, bei Lastkraftwagen, landwirtschaftlichen Fahrzeugen oder Schwerlastfahrzeugen zum Einsatz. Beispielhafte Fahrerhauslagerungen sind beispielsweise aus den Offenlegungsschriften DE 10 2008 063 475 A1 oder DE 10 2012 200 670 A1 bekannt.

Während im Fahrwerk sowohl der Fahrkomfort im Sinne von Reduktion der Aufbauschwingungen als auch die Fahrsicherheit im Sinne von gleichmäßigen Radaufstandskräften über semiaktive oder aktive Elemente beeinflusst werden kann, kann im Bereich der Fahrerhauslagerung nur ein Einfluss auf die Fahrerhausschwingungen und damit den Komfort genommen werden. Durch die direkte Wirkung ist der Einfluss aber größer als der der Fahrwerksdämpfung.

Aufgrund der federnden Lagerung des Fahrerhauses auf dem Fahrgestellrahmen kommt es beim Bremsen bzw. beim Beschleunigen des Fahrzeugs zu einer unerwünschten Nickbewegung in bzw. entgegen der Fahrtrichtung. Des Weiteren kommt es bei Kurvenfahrten zu nachteiligen Wankbewegungen des Fahrerhauses zum Kurvenäußeren hin. Der Grund ist im relativ hohen Schwerpunkt des Fahrerhauses auf dem Fahrgestellrahmen zu sehen. Derartige ungewollte Bewegungsfreiheitsgrade wie Nick- oder Wankbewegungen können über verstellbare, z. B. semiaktive, Dämpfer gezielt und wirksam bedämpft werden. Insbesondere auf Längsbeschleunigungen reagieren Fahrerhäuser aufgrund der verhältnismäßig geringen Länge und der damit verbunden kurzen Lagerbasis mit deutlichen Nickbewegungen.

Aus der Praxis sind Fahrerhauslagerungen von Nutzfahrzeugen bekannt, deren Dämpfung an unterschiedliche Fahrsituationen angepasst werden kann. So ist beispielsweise bekannt, die Dämpferkraft der verstellbaren Dämpfer der Fahrerhauslagerung im Normalbetrieb aus Komfortgründen auf eine weiche Dämpfung einzustellen, wobei jedoch temporär eine härtere Dämpfung, die die Dämpfkraft steigert, eingestellt wird, wenn anhand der fahrzeuginternen Sensorik ein fahrdynamischer Vorgang, wie ein Spurwechsel, ein Brems- oder Schaltvorgang festgestellt wird.

Bei diesen aus der Praxis bekannten Systemen wird auf Basis der über die Fahrzeugsensorik ermittelten Daten die Dämpfkraft geregelt. So reduziert die Elektronik bei einfacher Geradeausfahrt auf durchschnittlichen Straßen die Dämpfkraft, so dass die Kabine weich und komfortabel schwingen kann. Sobald sich aber durch Spurwechsel, Bremsen oder Gangwechsel die Anregung der Kabine verändert, hält die Dämpfersteuerung durch gezielte Erhöhung der Dämpfkraft das Fahrerhaus stabil.

Solche Systeme werden üblicherweise als Rückkopplungssysteme bezeichnet. Es kann jedoch schwierig sein, innerhalb einer kurzen Zeitspanne einen gegenwärtigen fahrdynamischen Zustand zu detektieren, zu bewerten und geeignete Anpassungen an dem Fahrerhauslagerungssystem auszuführen. Dies gilt insbesondere dann, wenn das Fahrzeug mit einer hohen Geschwindigkeit gefahren wird, da die Verzögerungszeit zwischen Beginn des geänderten fahrdynamischen Zustandes und einer entsprechenden Anpassung des Dämpfersystems durch das Rückkopplungssystem zu lang sein kann. Dies reduziert den Komfort im Fahrerhaus.

Weiterhin ist es im Stand der Technik bekannt, die Fahrerhauslagerung in Abhängigkeit einer ermittelten Straßeninformation eines vorausliegenden Straßensegments zu steuern. So offenbart beispielsweise die Offenlegungsschrift DE 10 2014 010 577 A1 eine Lagerungsanordnung, bei welcher der Aufbau an einem Rahmen eines Nutzfahrzeugs über eine Stelleinrichtung gelagert ist, die in Abhängigkeit von wenigstens einem erfassten Parameter einstellbar ist. Hierzu ist mit der Stelleinrichtung eine Erfassungseinrichtung zum Erfassen wenigstens eines eine in Vorwärtsfahrtrichtung vor dem Nutzfahrzeug angeordnete und von diesem befahrbare Fahrbahn charakterisierenden Parameters gekoppelt.

Auch aus der Offenlegungsschrift DE 10 2014 109 593 A1 ist eine Druckluftanlage für ein Nutzfahrzeug bekannt, die eine Steuerlogik zur Steuerung oder Regelung einer Chassis-Luftfederungsanlage und eine Steuerlogik zur Steuerung oder Regelung einer Kabinen-Luftfederungsanlage umfasst, wobei von der jeweiligen Steuerlogik auch eine zukünftige Fahrbahnneigung berücksichtigt wird.

Ferner offenbart die EP 3 090 890 A1 ein Verfahren zur Regelung oder Steuerung von Dämpfern in Kraftfahrzeugen, wobei die Regelung oder Steuerung der Dämpferkraft in Abhängigkeit wenigstens eines Parameters erfolgt, aus dem eine Fahrbahnbeschaffenheit ableitbar ist und von einer fahrzeugexternen Datenquelle bereitgestellt wird.

Auch die US 2010/0147640 A1 und die US 2014/0288776 A1 offenbaren aktive Fahrerhauslagerungen, bei welchen Informationen betreffend ein vorausliegendes Straßensegment aus zur Einstellung der Dämpfercharakteristik verwendet werden. Diese Informationen können hierzu aus GPS-Daten, Sensordaten und/oder Kameradaten ermittelt werden. Nachteilig an all diesen vorausschauenden Regelungen ist jedoch, dass die Kopplung zwischen Chassislagerung und Fahrerhauslagerung nur unzureichend berücksichtigt wird.

Es ist somit eine Aufgabe der Erfindung, ein verbessertes Verfahren zur Steuerung oder Regelung einer Fahrerhauslagerung eines Kraftfahrzeugs bereitzustellen, mit dem Nachteile herkömmlicher Ansätze vermieden werden können. Es ist insbesondere eine Aufgabe der Erfindung, ein derartiges Verfahren bereitzustellen, das einen höheren Komfort im Fahrerhaus ermöglicht. Eine weitere Aufgabe ist es, eine Vorrichtung zur Steuerung oder Regelung einer Fahrerhauslagerung eines Kraftfahrzeugs bereitzustellen, mit der Nachteile herkömmlicher Steuer- oder Regelvorrichtungen vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Steuerung oder Regelung einer Fahrerhauslagerung eines Kraftfahrzeugs bereitgestellt. Das Kraftfahrzeug kann ein Nutzfahrzeug, beispielsweise ein Lastkraftwagen sein. Die Fahrerhauslagerung weist eine verstellbare Feder-Dämpfer-Einrichtung zur dämpfenden und auch federnden Aufhängung des Fahrerhauses (auch als Fahrerkabine bezeichnet) eines Kraftfahrzeugs relativ zum Fahrzeugchassis auf.

Die Feder-Dämpfer-Einrichtung kann z. B. Teil einer Aufhängungseinrichtung der Fahrerhauslagerung sein. Das Fahrzeugchassis kann ein Fahrzeugrahmen bzw. Leiterrahmen sein. Die Feder-Dämpfer-Einrichtung weist verstellbare Dämpfer auf, die als semi-aktive oder aktive Dämpfer ausgebildet sein können. Hierbei können die dämpfenden Elemente und die federnden Elemente der Feder-Dämpfer-Einrichtung baulich getrennt voneinander ausgeführt sein oder als kombinierte Feder-Dämpfer-Elemente, z. B. eine verstellbare Luftfeder mit integriertem Dämpfer, ausgeführt sein.

Erfindungsgemäß erfolgt die Steuerung oder Regelung der Fahrerhauslagerung in Abhängigkeit von mindestens einer ermittelten Straßeninformation, die ein in Fahrtrichtung des Kraftfahrzeugs vorausliegendes Straßensegment betrifft, wobei in Abhängigkeit von der ermittelten Straßeninformation eine Anpassung einer Feder-Dämpfer-Einrichtung der Fahrerhauslagerung erfolgt. Hierbei erfolgt die Anpassung der Feder-Dämpfer-Einrichtung vorzugsweise vor oder zumindest bei Erreichung des vorausliegenden Straßensegments, insbesondere vor Erreichung einer Stelle, z. B. einer Fahrbahnunebenheit auf dem vorausliegenden Straßensegment, bei der eine Änderung des Straßenzustands ermittelt wird, die voraussichtlich eine für den Fahrer wahrnehmbare Änderung des federnden und/oder dämpfenden Verhaltens des Fahrerhauses beim Überfahren der Stelle bewirkt.

Das vorausliegende Straßensegment entspricht einem Abschnitt einer in Fahrtrichtung, insbesondere in Vorwärtsfahrtrichtung, vorausliegenden Fahrtstrecke des Kraftfahrzeugs. Nachfolgend wird daher auch der Ausdruck vorausliegender Streckenabschnitt verwendet, der als gleichbedeutend anzusehen ist.

Ein besonderer Vorzug der Erfindung liegt darin, dass die Nachteile der aus der Praxis bekannten Ansätze durch die Verwendung einer vorausschauenden Erfassung von Straßeninformationen, mittels derer die Feder-Dämpfer-Einrichtung der Fahrerhauslagerung präventiv gesteuert bzw. geregelt wird, vermieden werden. Anhand der ermittelten Straßeninformationen können vorausschauend Straßenzustände auf dem vorausliegenden Straßensegment ermittelt werden, bei denen eine Änderung der Feder-Dämpfer-Einstellung aus Komfortgründen ratsam ist. Durch das vorausschauende Ermitteln dieser Straßenzustände ist es möglich, die Feder-Dämpfer-Einrichtung der Fahrerhauslagerung präventiv anzupassen, d. h. vor oder zumindest bei Erreichung des erkannten Straßenzustandes auf dem vorausliegendem Straßensegment, und nicht erst, wenn dieser geänderte Straßenzustand sich durch veränderte Federbewegungen und/oder Wankbewegungen bereits bemerklich gemacht hat.

Eine Anpassung einer Feder-Dämpfer-Einrichtung der Fahrerhauslagerung kann beispielsweise eine Veränderung der Dämpfungseigenschaften, z. B. durch Auswahl einer härteren oder weicheren Dämpfereinstellung, umfassen und/oder eine Anpassung des Neigungswinkel des Fahrerhauses unter Verwendung der Feder-Dämpfereinrichtung, wie nachfolgend noch detaillierter erläutert wird. Die Anpassung kann stufenlos oder mehrstufig, z. B. dreistufig, realisiert sein.

Der Ausdruck "Straßeninformationen", wie er hier verwendet wird, umfasst alle Typen von Bildern, Koordinaten, Daten und/oder anderen Informationen, die das in Fahrtrichtung vorausliegende Straßensegment betreffen. Einige Beispiele geeigneter Straßeninformationen umfassen: Kamera-Rohbilder (zusammengefügt oder nicht zusammengefügt), verarbeitete Kamerabilder und/oder spezielle Stücke von Daten oder Informationen, die anhand der Kamerabilder entnommen oder abgeleitet sind, um verschiedene Möglichkeiten zu nennen. Straßeninformationen können ferner aus Kartendaten, z. B. auf einem Navigationssystem in Verbindung mit Standortinformationen, z. B. GPS-Daten, ermittelt werden. Auf diese Weise können beispielsweise Kurven auf dem vorausliegendem Streckenabschnitt bestimmt werden, inklusive des Kurvenradius.

Die Straßeninformation kann demzufolge mindestens eine Informationen umfassen, die auf einen Straßenbelagszustand, eine Fahrbahnunebenheit und/oder ein auf der Straßenoberfläche liegendes Objekt schließen lässt, wie z. B. ein Schlagloch, eine Bodenwelle oder ein auf der Straße liegender Gegenstand. Die Straßeninformation kann ferner Änderungen der Straßenoberfläche, wie z. B. Übergänge zwischen Beton, Asphalt, Kopfsteinpflaster, Schotter, Schmutz usw., offenlegen oder identifizieren. Die ermittelten Straßeninformationen können auch eine Distanzinformation umfassen, die eine Position, einen Abstand und/oder eine Zeit bis zum Erreichen des Objekts und/oder der Änderung der Straßenoberfläche angibt.

Die Straßeninformation kann ferner Informationen umfassen, die auf eine Kurve auf dem vorausliegenden Streckenabschnitt schließen lassen, beispielsweise Informationen betreffend einen Beginn einer Kurve, z. B. Abstand oder Zeit bis zum Erreichen der Kurve, die Richtung der Kurve (links oder rechts) oder den Kurvenradius.

So kann beispielsweise bei Erkennung eines Objekts oder einer Änderung der Straßenoberfläche auf dem vorausliegenden Straßensegment oder bei Erkennung einer sich nähernden Kurve bereits vor Erreichen dieser Stelle, d. h. vor Erreichen der Lage des Objekts, beispielsweise kann das Objekt ein Gegenstand auf der Straße, z. B. ein Stein oder ein Pylon sein, oder vor Erreichen der geänderten Straßenoberfläche oder vor Erreichen der Beginn der Kurve, ein komfortoptimiertes Steuer- oder Regelverhalten zum Über- bzw. Durchfahren der erkannten Stelle ausgewählt werden und entsprechende Gegenmaßnahmen können durch geeignete Ansteuerung der verstellbaren Feder-Dämpfereinrichtung präventiv eingeleitet werden.

Beispielsweise kann, falls anhand der Straßeninformation auf eine vorausliegende Fahrbahnunebenheit geschlossen wird, die Feder-Dämpfer-Vorrichtung des Fahrerhauses zum Überfahren der Fahrbahnunebenheit auf eine weichere Dämpfung eingestellt werden, insbesondere oder zumindest bei Geradeausfahrt. Dadurch wird der Komfort für die Passagiere im Fahrerhaus erhöht.

Vorstehend wurde bereits erwähnt, dass die Straßeninformation Informationen umfassen kann, die auf eine Kurve und/oder einen Kurvenverlauf schließen lassen. Gemäß einer Variante dieser Ausführungsform kann, falls anhand der Straßeninformation auf eine Kurve in dem vorausliegenden Straßensegment geschlossen wird, über die Feder-Dämpfer-Vorrichtung beim Durchfahren der Kurve eine Querneigung des Fahrerhauses zur Minderung einer bei Kurvenfahrt auftretenden Fliehkraft eingestellt werden, so dass das Kraftfahrzeug mit seitlich geneigtem Fahrerhaus durch die Kurve fährt, entsprechend einer Kurvenfahrt mit Schräglage des Fahrerhauses.

Gemäß dieser Variante wird somit über die Feder-Dämpfer-Einrichtung eine Querneigung des Fahrerhauses bei einer Kurvenfahrt erzeugt, so dass sich das Fahrerhaus "in die Kurve legt", d. h. es kann eine Linksneigung des Fahrerhauses zur Durchfahrt einer Linkskurve eingestellt werden und eine Rechtsneigung zur Durchfahrt einer Rechtskurve. Dadurch wird während schneller Kurvenfahrt die für den Fahrer oder Fahrgast unangenehme, nach bogenaußen wirkende Fliehkraft durch entsprechende Neigung des Fahrerhauses gemindert und dadurch der Fahrkomfort erhöht. Ferner kann mit höherer Geschwindigkeit sicher durch eine Kurve gefahren werden.

Eine Querneigung mittels der Feder-Dämpfer-Einrichtung kann beispielsweise dadurch erzeugt werden, dass die aktiven Dämpfer auf einer Seite, nämlich der Seite, die auf dem Inneren des durchfahrenen Bogens der Kurve liegt, abgesenkt werden. Sind die Dämpfer nicht als aktive Dämpfer, sondern als semiaktive Dämpfer ausgeführt, kann eine Querneigung mittels höhenverstellbarer Federelemente, z. B. in der Höhe verstellbare Luftfederbälge, erzielt werden, die auf einer Seite abgesenkt und/oder auf der anderen Fahrerhausseite ausgefahren werden.

Eine Querneigung ist eine Neigung relativ zur Längsachse des Fahrzeugs bzw. Fahrtrichtung, in Richtung auf das Innere des durchfahrenen Bogens. Mittels der Fahrerhauslagerung kann somit ein Neigungswinkel zwischen dem Fahrerhaus und dem Fahrzeugrahmen gestellt/verändert werden

Gemäß einer weiteren Variante kann ein Neigungswinkel der Querneigung in Abhängigkeit von einem ermittelten Kurvenradius der Kurve eingestellt werden, so dass der Grad der Neigung automatisch an die Stärke der Kurve angepasst wird. Der Kurvenradius kann aus Straßenkartendaten ermittelt werden oder mittels einer Sensoreinrichtung, z. B. einer den vorausliegenden Streckenabschnitt erfassenden Kamera, erfasst werden. Ferner kann der Neigungswinkel der Querneigung in Abhängigkeit von einer aktuellen Fahrgeschwindigkeit eingestellt werden. Beispielsweise kann der Neigungsgrad umso größer eingestellt werden, desto kleiner der Kurvenradius und/oder desto höher die Fahrgeschwindigkeit ist, d. h. desto größer die erwarteten Fliehkräfte während der Kurvenfahrt sind.

Ferner besteht die Möglichkeit, die Querneigung bei einer Kurvenfahrt nur dann einzustellen, falls der Kurvenradius kleiner als ein vorbestimmte Kurvenradius-Schwellenwert ist und/oder falls die momentane Fahrgeschwindigkeit größer als ein vorbestimmter Fahrgeschwindigkeitsschwellenwert ist. Bei dieser Variante kann somit eine Querneigung nur in Fahrsituationen eingestellt werden, bei denen die erwarteten Kurven-Fliehkräfte einen gewissen Schwellenwert überschreiten und somit eine Komfortbeeinträchtigung im Fahrerhaus ohne Querneigung zu erwarten wäre.

Erfindungsgemäß erfolgt in einem ersten Betriebsmodus in Abhängigkeit von der ermittelten Straßeninformation nur eine Anpassung der Feder-Dämpfer-Einrichtung der Fahrerhauslagerung und keine Anpassung einer Feder-Dämpfer-Einrichtung der Chassis-Lagerung des Kraftfahrzeugs. In einem zweiten Betriebsmodus erfolgt dagegen in Abhängigkeit von der ermittelten Straßeninformation sowohl eine Anpassung der Feder-Dämpfer-Einrichtung der Fahrerhauslagerung als auch eine Anpassung der Feder-Dämpfer-Einrichtung der Chassis-Lagerung (Fahrwerkslagerung, z. B. Lagerung des Leiterrahmens eines Nutzfahrzeugs) des Kraftfahrzeugs. Hierbei wird in Abhängigkeit von der ermittelten Straßeninformation bestimmt, ob der erste oder der zweite Betriebsmodus ausgewählt wird. Insbesondere kann in Abhängigkeit von der ermittelten Straßeninformation bestimmt werden, ob die Anpassung der Fahrerhauslagerung voraussichtlich ausreicht, die zu erwartende Änderung der Fahrbahneigenschaft zu kompensieren, so dass in diesem Fall der erste Betriebsmodus ausgewählt werden kann, oder ob z. B. eine vorausliegende Fahrbahnunebenheit so groß ist, dass aus Komfortgesichtspunkten sowohl eine Anpassung der Fahrerhauslagerung als auch eine Anpassung der Chassis-Lagerung vonnöten ist. In diesem Fall kann der zweite Betriebsmodus ausgewählt werden.

Diese Ausführungsform ist aus Energieeffizienzgesichtspunkten besonders vorteilhaft, da die Fahrerhauslagerung im Vergleich zur Chassislagerung weniger Energie benötigt. Dies liegt im Wesentlichen an der in der Regel kleineren bewegten Masse bei der Fahrerhauslagerung im Vergleich zu den bewegten Massen, die von der Chassislagerung gefedert und gedämpft werden müssen. Bei letzterer kommt bei einem beladenen Fahrzeug noch die Ladung hinzu. Ein weiterer Vorteil ist, dass die Dämpfer für die Chassis-Lagerung kleiner und damit kostengünstiger ausgelegt werden können.

Eine vorteilhafte Variante dieser Ausführungsform sieht vor, dass in Abhängigkeit von der ermittelten Straßeninformation ein Wert ermittelt wird, der auf ein Maß einer Fahrbahnunebenheit auf dem vorausliegenden Straßensegment schließen lässt, und dass, falls der ermittelte Wert einen vorbestimmten Schwellenwert überschreitet und somit eine große Fahrbahnunebenheit anzeigt, der zweite Betriebsmodus ausgewählt wird und falls der ermittelte Wert den vorbestimmten Schwellenwert nicht überschreitet, der erste Betriebsmodus ausgewählt wird.

Ferner besteht im Rahmen der Erfindung die Möglichkeit, dass bei Seitenwind eine Querneigung des Fahrerhauses eingestellt wird, derart, dass sich das Fahrerhaus entgegen der Windrichtung quer zur Fahrtrichtung neigt. Auch dies erhöht den Fahrkomfort und die Fahrsicherheit.

Die mindestens eine ermittelte Straßeninformation, die ein in Fahrtrichtung des Kraftfahrzeugs vorausliegendes Straßensegment betrifft, kann mittels zumindest einem der folgenden Einrichtungen erfasst werden: ein Straßenkarteninformationssystem, ein Navigationssystem und/oder eine Sensoreinrichtung, die ausgebildet ist, einen in Fahrtrichtung des Kraftfahrzeugs vorausliegenden Straßenverlauf zu erfassen, z. B. ein 3D-Kamerasystem oder ein Lasersystem. Entsprechend kann eine Steuereinrichtung oder Regeleinrichtung der Fahrerhauslagerung ausgeführt sein, die Straßeninformation von einer dieser Einrichtungen zu empfangen, z. B. einer Kamera oder einem Navigationsgerät.

Der Ausdruck "Verfahren zur Steuerung oder Regelung der Fahrerhauslagerung" wird verwendet, da im Stand der Technik sowohl Steuerverfahren zur Fahrerhauslagerung als auch Regelverfahren bekannt sind. Die Erfindung kann diese an sich bekannten Verfahren weiterbilden, indem zusätzlich zu der bekannten Steuerung oder Regelung zusätzlich in Abhängigkeit von der ermittelten Straßeninformation eine Anpassung einer Feder-Dämpfer-Einrichtung der Fahrerhauslagerung erfolgt, z. B. im Rahmen einer Vorsteuerung oder durch Anpassung der bekannten Steuer- und Regelgrößen.

Gemäß einem zweiten Gesichtspunkt der Erfindung wird eine Vorrichtung zur Steuerung oder Regelung einer Fahrerhauslagerung eines Kraftfahrzeugs bereitgestellt, wobei die Vorrichtung ausgebildet ist, das Verfahren zur Steuerung oder Regelung der Fahrerhauslagerung, wie in diesem Dokument beschrieben, durchzuführen.

Zur Vermeidung von Wiederholungen sollen daher rein verfahrensgemäß offenbarte Merkmale auch als funktionale Merkmal der Steuer- oder Regelvorrichtung als vorrichtungsgemäß offenbart gelten und beanspruchbar sein. Die vorgenannten Aspekte und erfindungsgemäßen Merkmale des Verfahrens gelten somit auch für eine entsprechend ausgebildete Vorrichtung zur Steuerung oder Regelung einer Fahrerhauslagerung.

Die Erfindung betrifft ferner ein Kraftfahrzeug, insbesondere ein Nutzfahrzeug, aufweisend eine derartige Vorrichtung zur Steuerung oder Regelung einer Fahrerhauslagerung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Nutzfahrzeugs mit einer Vorrichtung zur Regelung oder Steuerung einer Fahrerhauslagerung des Nutzfahrzeugs gemäß einer Ausführungsform der Erfindung;
- Figur 2: ein Ablaufdiagramm zur Illustration eines Verfahrens zur Regelung oder Steuerung einer Fahrerhauslagerung des Nutzfahrzugs gemäß einer Ausführungsform der Erfindung;
- Figur 3: ein schematisches Blockdiagram zur Illustration eines Verfahrens zur Regelung oder Steuerung einer Fahrerhauslagerung des Nutzfahrzeugs gemäß einer Ausführungsform der Erfindung;
- Figur 4: das Nutzfahrzeug und schematisch die Erfassung einer Straßenunebenheit mit einer vorausschauenden Sensoreinrichtung unter Verwendung einer Kamera; und
- Figur 5: das Nutzfahrzeug und schematisch die Erfassung einer vorausliegenden Kurve.

Gleiche oder funktional äquivalente Elemente sind in allen Figuren mit denselben Bezugszeichen bezeichnet und zum Teil nicht gesondert beschrieben.

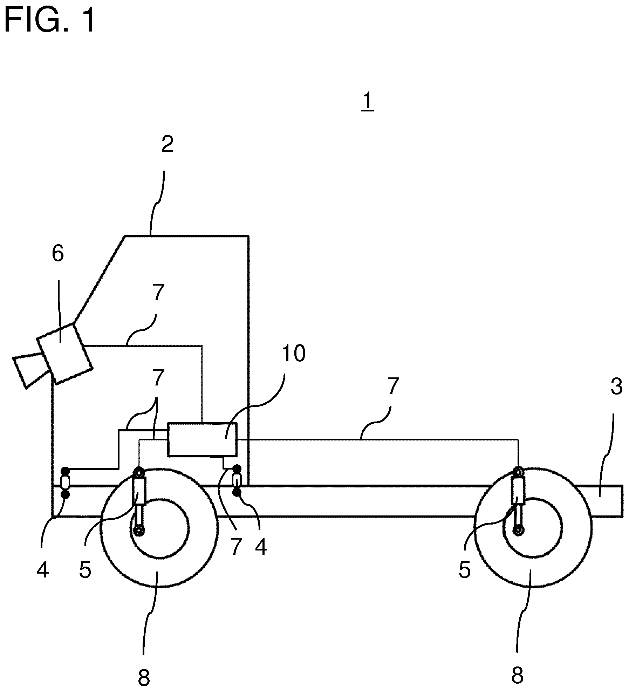

Figur 1 zeigt eine stark schematisierte Darstellung eines Nutzfahrzeugs 1. Der Fahrzeugrahmen 3 ist mittels einer eigenen Lagerung (Fahrwerkslagerung bzw. Chassislagerung) federnd und dämpfend mit den Fahrzeugrädern 8 verbunden, wobei hier in an sich bekannter Weise mehrere Feder-/Dämpferelemente 5 zum Einsatz kommen.

Da bei derartigen Fahrzeugen die Feder- bzw. Dämpferraten der Feder-/Dämpferelemente 5 des Fahrwerks aufgrund erheblicher Fahrzeuggewichte sowie aufgrund der hohen ungefederten Massen im Fahrwerk vergleichsweise hoch gewählt werden müssen, werden Fahrbahnunebenheiten oder auch Schwingungen aus Achsen und Antriebsstrang zunächst noch zu einem erheblichen Teil über die Achsfederung auf den Fahrzeugrahmen 3 übertragen. Aus diesem Grund ist es erforderlich, das Fahrerhaus 2 mittels einer eigenen geeigneten Fahrerhaus-Lagerung nochmals separat vom Fahrzeugchassis 3 zu entkoppeln. Das Fahrerhaus 2 ist daher mittels einer Fahrerhaus-Lagerung auf dem Fahrzeugrahmen 3 gelagert. Die Fahrerhaus-Lagerung umfasst hierzu mehrere verstellbare Feder-/Dämpfeinheiten 4, deren Dämpferkraft mittels einer Steuervorrichtung 10 einstellbar ist. Bei den Feder/Dämpfereinheiten 4 der Fahrerhaus-Lagerung kann es sich lediglich beispielhaft um druckregelbare Luftfedern handeln. Beispielsweise sind an den vier Eckbereichen des Fahrerhausbodens jeweils eine solche Feder-/Dämpfereinheit 4 vorgesehen.

An der Fahrzeugfrontseite ist eine Kamera 6 angeordnet, die fortlaufend ein in Fahrtrichtung des Nutzfahrzeugs 1 vorausliegendes Straßensegment 40 erfasst. Die Kamera 6 ist vorzugsweise als 3D-Kamera ausgebildet und kann beispielsweise die bestehende Kamera eines Fahrerassistenzsystems, beispielsweise eine Kamera eines Spurhaltesystems, sein.

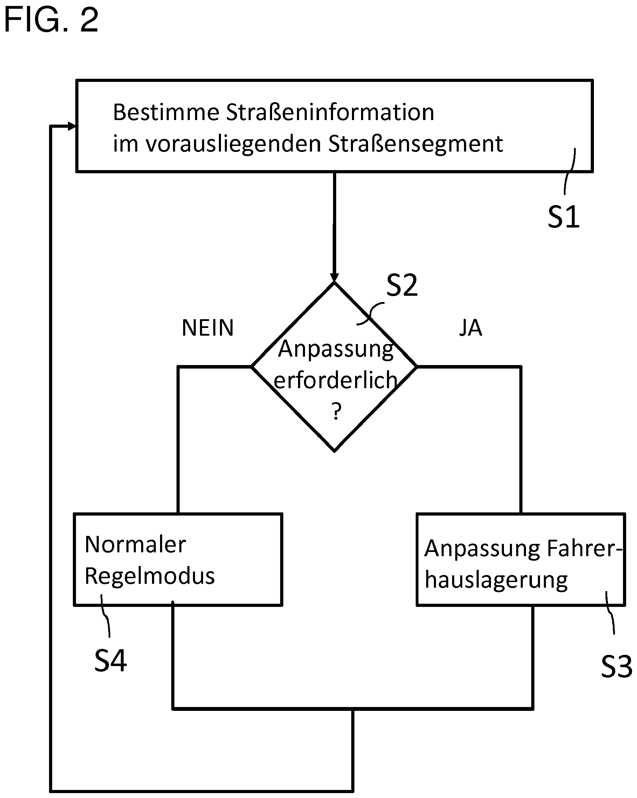

Das Nutzfahrzeug umfasst ferner eine Steuer- oder Regelvorrichtung 10 (nachfolgend lediglich als Steuervorrichtung bezeichnet), die in Abhängigkeit von mindestens einer ermittelten Straßeninformation 31, die ein in Fahrtrichtung des Kraftfahrzeugs 1 vorausliegendes Straßensegment betrifft, eine Anpassung einer Feder-Dämpfer-Einrichtung 4 der Fahrerhauslagerung vornehmen kann. Die Straßeninformation kann beispielsweise durch die Kamera 6 erfasst werden. Die Steuervorrichtung 10 ist insbesondere eingerichtet, das Verfahren zur Anpassung der Dämpferkraft verstellbarer Dämpfer durchzuführen, was nachfolgend beispielhaft anhand der Schritte S1 bis S4, wie in Figur 2 dargestellt, beschrieben wird.

Die Steuervorrichtung 10 kann optional gemäß einer bevorzugten Ausführungsform ferner in Abhängigkeit von mindestens einer ermittelten Straßeninformation, die ein in Fahrtrichtung des Kraftfahrzeugs 1 vorausliegendes Straßensegment 40 betrifft, auch eine Anpassung einer Feder-Dämpfer-Einrichtung 5 der Fahrwerkslagerung vornehmen, so dass zwischen dem ersten Betriebsmodus und dem zweiten Betriebsmodus, der vorstehend bereits beschrieben wurde, gewechselt werden kann.

Hierzu ist die Steuervorrichtung 10 über Steuerleitungen 7 (in Form von Signalleitungen und/oder den Fahrzeug-Datenbus) mit den Feder-Dämpfer-Elementen 4 der Fahrerhauslagerung und den Feder-Dämpfer-Elementen 5 der Fahrwerkslagerung verbunden.

Die Steuervorrichtung 10 kann als ein zentrales Steuergerät oder als eine beliebige Vielzahl von elektronischen Verarbeitungseinrichtungen, Speichereinrichtungen und/oder von anderen bekannten Komponenten ausgeführt sein. So kann beispielsweise die von der Steuervorrichtung 10 durchgeführte Bildverarbeitung zur Extraktion der Straßeninformation in einem eigenen Steuergerät für die Dämpferregelung durchgeführt oder alternativ in einem Fremdsteuergerät für andere Assistenzfunktionen oder auch direkt in die Steuereinheit der Kamera 6 integriert sein.

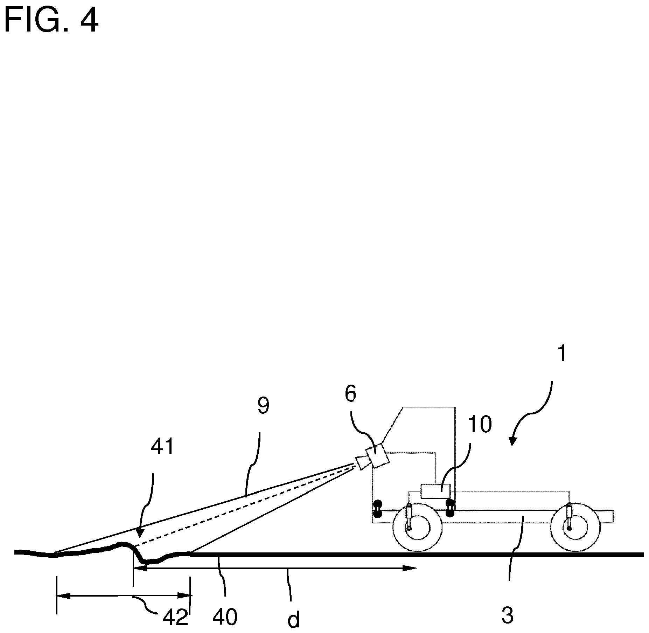

In Schritt S1 der Figur 2 werden unter Verwendung der Ausgabedaten der Kamera 6 fortlaufend Straßeninformationen erfasst. Hierbei ist die Steuervorrichtung 10 eingerichtet, die von der Kamera 6 erfassten Bilddaten auszuwerten, um das vorausliegende Straßensegment 40 zu untersuchen, einzuschätzen und/oder auf andere Weise zu bewerten, um daraus Straßeninformationen zu generieren, die dieses Straßensegment betreffen. Dies ist beispielhaft in Figur 4 dargestellt.

In Figur 4 ist der Sichtkegel 9 der Kamera 6 gezeigt, der fortlaufend ein in Fahrtrichtung des Fahrzeugs 1 vorausliegendes Straßensegment 40 mit einer vorbestimmten Blickrichtung abtastet. In dem in Figur 4 gezeigten Zustand befindet sich aktuell eine Fahrbahnunebenheit, z. B. eine Bodenwelle 41 im Sichtfeld 9 der Kamera 6, die auf diese Weise erfasst werden kann. Aus der vorbestimmten Blickrichtung der Kamera kann ferner der Abstand d zu der Fahrbahnunebenheit 41 ermittelt werden. Dieser Abstand d entspricht dem Abstand der vorderen Fahrzeugachse bis zur Mittellinie des Sichtkegels 9, wenn die Mittellinie die Fahrbahnunebenheit erreicht. Der Durchmesser des Sichtkegels 9 ist mit dem Bezugszeichen 42 gekennzeichnet.

Die Generierung der Straßeninformationen aus den Ausgabedaten der Kamera 6 kann mittels bekannter Bildverarbeitungstechniken erfolgen. Die Straßeninformationen geben an, ob sich eine Fahrbahnunebenheit 41 in dem vorausliegenden Straßenabschnitt 40 befindet. Die Fahrbahnunebenheit kann beispielsweise ein Schlagloch, eine Bodenwelle oder ein Objekt auf der Fahrbahn sein.

Die Straßeninformationen können auch unterschiedliche Typen von Straßenzuständen in dem bevorstehenden Straßensegment identifizieren, wie beispielsweise eine Änderung der Straßenoberfläche, Risse, Unebenheiten, Schmutz etc. Die Straßeninformationen können ferner eine Distanzinformation der Fahrbahnunebenheit enthalten. Die Distanzinformation kann z. B. einen Abstand d vom Fahrzeug 1 bis zur Fahrbahnunebenheit angeben.

Zusätzlich oder alternativ kann die mindestens eine Straßeninformation, die ein in Fahrtrichtung des Kraftfahrzeugs vorausliegendes Straßensegment 40 betrifft, auch aus Straßenkartendaten, z. B. eines Navigationsgeräts, in Verbindung mit der aktuellen Fahrposition des Fahrzeugs 1, die anhand von GPS-Daten ermittelt wird, erhalten werden. Hiermit können vorausliegende Kurven und Kurvenradien zuverlässiger bestimmt werden.

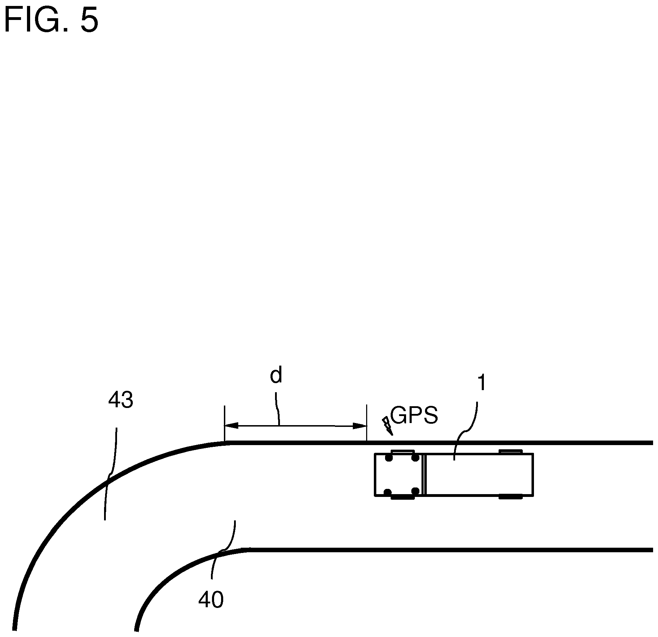

Dies ist beispielhaft und stark schematisiert in Figur 5 dargestellt. Hier erkennt die Steuervorrichtung 10 eine auf der Fahrtstrecke vorausliegende Kurve 43 und ermittelt den Abstand d bis zum Erreichen der Kurve. Ferner ist es möglich, mit den Kartendaten aus einem Navigationssystem eine Plausibilisierung mit den Daten der Kamera 6 durchzuführen, um die Güte der Signalauswertung für den Fahrbahnlauf weiter zu steigern.

Basierend auf den in Schritt S1 ermittelten Straßeninformationen wird anschließend in Schritt S2 ermittelt, ob eine präventive Anpassung der Fahrerhauslagerung notwendig ist. Dies ist beispielsweise dann der Fall, wenn eine Fahrbahnunebenheit 41 oder eine starke Kurve 43 auf dem vorausliegenden Streckenabschnitt 40 erkannt wurde. In diesem Fall wird mit Schritt S3 fortgefahren, andernfalls mit Schritt S4.

In Schritt S3 wird vor Erreichen der Fahrbahnunebenheit oder der Kurve eine Anpassung der Fahrerhauslagerung vorgenommen, kurz bevor das Fahrzeug 1 die Fahrbahnunebenheit oder die Kurve erreicht. Im Falle einer Fahrbahnunebenheit wird die Feder-DämpferEinrichtung 4 des Fahrerhauses zum Überfahren der Fahrbahnunebenheit auf eine weichere Dämpfungscharakteristik eingestellt, was den Komfort für den Fahrer im Fahrerhaus erhöht. Im Falle einer Kurve wird zum Durchfahren der Kurve einer Querneigung des Fahrerhauses zur Minderung einer bei Kurvenfahrt auftretenden Fliehkraft eingestellt, so dass sich das Fahrerhaus 2 leicht in die Kurve legt.

Im Falle von Schritt S4 wird keine derartige Anpassung der Fahrerhauslagerung vorgenommen, sondern die Feder-Dämpfer-Einrichtung 4 des Fahrerhaus wird in an sich bekannter Weise geregelt oder gesteuert.

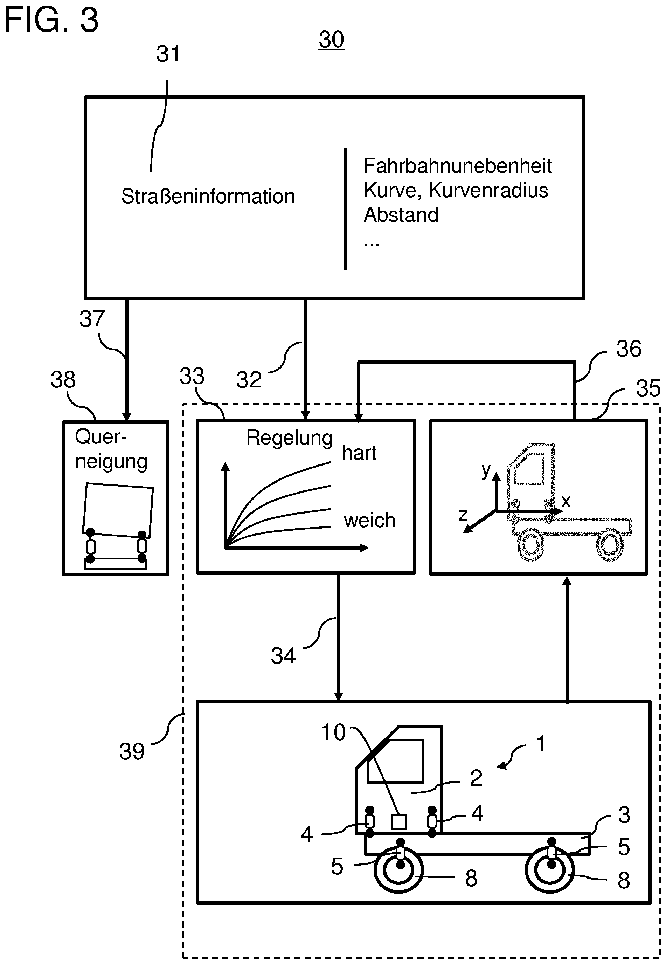

Die Anpassung der Feder-Dämpfer-Einrichtung 4 der Fahrerhauslagerung ist nochmals an einem Beispiel in Zusammenhang mit Figur 3 beispielhaft erläutert. Das Block- bzw. Ablaufdiagramm 30 der Figur 3 illustriert eine Regelung der Fahrerhauslagerung gemäß einem Ausführungsbeispiel der Erfindung.

Die von der gestrichelten Linie 39 umfassten Komponenten stellen einen an sich bekannten Regelkreis zur Regelung der Dämpferkraft einer Feder-Dämpfer-Einrichtung 4 einer Fahrerhauslagerung dar.

In einer Steuervorrichtung 10 der Fahrerhauslagerung sind verschiedene Regelungskennlinien hinterlegt. Je nach ausgewählter Kennlinie wird einer härtere oder weichere Kennlinie der Fahrerhauslagerung zu Grunde gelegt. In Abhängigkeit von der jeweils aktuell ausgewählten Kennlinie regelt die Steuervorrichtung 10 dann die Dämpferkraft der verstellbaren Dämpfer 4, was durch den Schritt 34 dargestellt ist. Als Teil des Regelkreises werden fortlaufend die Reaktionen des Fahrerhauses 2 überwacht, beispielsweise dessen Bewegung in x-, y- und z-Richtung, was durch den Schritt 35 schematisch dargestellt ist. Diese Abweichungen werden als Regelgröße an die Steuervorrichtung 10 rückgeführt, die dann in Abhängigkeit von dem Wert der Regelgröße entsprechend angepasste Stellgrößen für den Regelkreis ermittelt. Ein derartiger Regelkreis kann ein Beispiel für den in Schritt S4 erwähnten normalen Regelmodus sein.

Zusätzlich zu diesem bekannten Regelkreis werden nun fortlaufend, wie vorstehend beschrieben, Straßeninformationen betreffend ein in Fahrtrichtung des Kraftfahrzeugs 1 vorausliegendes Straßensegment 40 ermittelt, beispielsweise ob eine Fahrbahnunebenheit oder eine Kurve bald durchfahren wird etc.

Im Falle einer erkannten Fahrbahnunebenheit wählt die Steuervorrichtung 10 eine Kennlinie mit weicherer Dämpfungscharakteristik aus, was in den Schritten 32 und 33 dargestellt ist. Die "weichere" Kennlinie wird dann dem Regelkreis zu Grunde gelegt, bis die Fahrbahnunebenheit überfahren wurde. Anschließend kann wieder eine härtere Kennlinie ausgewählt werden.

Im Falle einer Kurve wird zum Durchfahren der Kurve eine Querneigung des Fahrerhauses zur Minderung einer bei Kurvenfahrt auftretenden Fliehkraft eingestellt, so dass sich das Fahrerhaus 2 leicht in die Kurve legt. Dies ist in Schritt 38 dargestellt. Eine Querneigung des Fahrerhauses mittels der Feder-Dämpfer-Einrichtung 4 kann beispielsweise dadurch erzeugt werden, dass die aktiven Dämpfer auf einer Seite (d. h. der Seite, die auf dem Inneren des durchfahrenen Bogens der Kurve liegt) abgesenkt werden. Sind die Dämpfer nicht als aktive Dämpfer sondern als semiaktive Dämpfer ausgeführt, kann eine Querneigung durch Anpassung der höhenverstellbaren Federelemente, z. B. in der Höhe verstellbare Luftfederbälge, erzielt werden, die auf einer Seite abgesenkt und/oder auf der anderen Fahrerhausseite ausgefahren werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der beigefügten Patentansprüche zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeug, insbesondere Nutzfahrzeug
- 2: Fahrerhaus
- 3: Fahrzeugchassis, z. B. Fahrzeugrahmen
- 4: Feder-Dämpfer-Einrichtung des Fahrerhauses
- 5: Feder-Dämpfer-Einrichtung des Fahrzeug-Chassis
- 6: Kamera
- 7: Signalleitung
- 8: Reifen
- 9: Sichtkegel
- 10: Steuervorrichtung
- 40: vorausliegender Streckenabschnitt
- 41: Fahrbahnunebenheit
- 42: Durchmesser Sichtkegel
- 43: Kurve
- D: Abstand

## Patentansprüche

1. Verfahren zur Steuerung oder Regelung einer Fahrerhauslagerung und einer Chassis-Lagerung (5) eines Kraftfahrzeugs (1), wobei die Steuerung oder Regelung der Fahrerhauslagerung in Abhängigkeit von mindestens einer ermittelten Straßeninformation (31), die ein in Fahrtrichtung des Kraftfahrzeugs (1) vorausliegendes Straßensegment (40) betrifft, erfolgt, derart, dass in Abhängigkeit von der ermittelten Straßeninformation (31) eine Anpassung einer Feder-Dämpfer-Einrichtung (4) der Fahrerhauslagerung erfolgt,
**dadurch gekennzeichnet,**
a) **dass** in einem ersten Betriebsmodus in Abhängigkeit von der ermittelten Straßeninformation (31) nur eine Anpassung der Feder-Dämpfer-Einrichtung (4) der Fahrerhauslagerung erfolgt und keine Anpassung einer Feder-DämpferEinrichtung (5) der Chassis-Lagerung des Kraftfahrzeugs (1) erfolgt; und
b) **dass** in einem zweiten Betriebsmodus in Abhängigkeit von der ermittelten Straßeninformation (31) sowohl eine Anpassung der Feder-Dämpfer-Einrichtung (4) der Fahrerhauslagerung als auch eine Anpassung der Feder-DämpferEinrichtung (5) der Chassis-Lagerung des Kraftfahrzeugs (1) erfolgt;
c) wobei in Abhängigkeit von der ermittelten Straßeninformation (31) bestimmt wird, ob der erste oder zweite Betriebsmodus ausgewählt wird.

2. Verfahren nach Anspruch 1, **dadurch gekennzeichnet, dass** die Anpassung der Feder-Dämpfer-Einrichtung (4) vor oder zumindest bei Erreichung des vorausliegenden Straßensegments (40) erfolgt.

3. Verfahren nach einem der vorhergehenden Ansprüche, **dadurch gekennzeichnet, dass** die Straßeninformation (31) mindestens eine Informationen umfasst, die auf einen Straßenbelagszustand, eine Fahrbahnunebenheit (41) und/oder ein auf der Straßenoberfläche liegendes Objekt schließen lässt.

4. Verfahren nach einem der vorhergehenden Ansprüche, **dadurch gekennzeichnet, dass**, falls anhand der Straßeninformation (31) auf eine vorausliegende Fahrbahnunebenheit (41) geschlossen wird, die Feder-Dämpfer-Vorrichtung (4) des Fahrerhauses zum Überfahren der Fahrbahnunebenheit (41) auf eine weichere Dämpfung eingestellt wird.

5. Verfahren nach einem der vorhergehenden Ansprüche, **dadurch gekennzeichnet,**
a) **dass** die Straßeninformation (31) mindestens Informationen umfasst, die auf eine Kurve (43) und/oder Kurvenverlauf schließen lassen; und
b) **dass**, falls anhand der Straßeninformation (31) auf eine Kurve (43) in dem vorausliegenden Straßensegment (40) geschlossen wird, über die Feder-Dämpfer-Vorrichtung (4) beim Durchfahren der Kurve (43) eine Querneigung (38) des Fahrerhauses zur Minderung einer bei Kurvenfahrt auftretenden Fliehkraft eingestellt wird.

6. Verfahren nach Anspruch 5, **dadurch gekennzeichnet, dass** ein Neigungswinkel der Querneigung (38) in Abhängigkeit von einem ermittelten Kurvenradius der Kurve (43) eingestellt wird.

7. Verfahren nach Anspruch 1, **dadurch gekennzeichnet,**
a) **dass** in Abhängigkeit von der ermittelten Straßeninformation (31) ein Wert ermittelt wird, der auf ein Maß einer Fahrbahnunebenheit (41) auf dem vorausliegenden Straßensegment (40) schließen lässt, und
b) **dass**, falls der ermittelte Wert einen vorbestimmten Schwellenwert überschreitet, der zweite Betriebsmodus ausgewählt wird und falls der ermittelte Wert den vorbestimmten Schwellenwert nicht überschreitet, der erste Betriebsmodus ausgewählt wird.

8. Verfahren nach einem der vorhergehenden Ansprüche, **dadurch gekennzeichnet, dass** bei Seitenwind eine Querneigung des Fahrerhauses (2) eingestellt wird, derart, dass sich das Fahrerhaus entgegen der Windrichtung quer zur Fahrtrichtung neigt.

9. Verfahren nach einem der vorhergehenden Ansprüche, **dadurch gekennzeichnet, dass** die mindestens eine ermittelte Straßeninformation, die ein in Fahrtrichtung des Kraftfahrzeugs vorausliegendes Straßensegment betrifft, mittels zumindest einer der folgenden Einrichtungen erfasst wird: ein Straßenkarteninformationssystem, ein Navigationssystem und/oder eine Sensoreinrichtung, die ausgebildet ist, einen in Fahrtrichtung des Kraftfahrzeugs (1) vorausliegendes Straßenverlauf (40) zu erfassen, z. B. ein 3D-Kamerasystem (3) oder ein Lasersystem.

10. Vorrichtung (10) zur Steuerung oder Regelung einer Fahrerhauslagerung eines Kraftfahrzeugs (1), wobei die Vorrichtung (10) ausgebildet ist, das Verfahren gemäß einer der vorhergehenden Ansprüche durchzuführen.

11. Kraftfahrzeug (1), insbesondere ein Nutzfahrzeug, aufweisend eine Vorrichtung nach Anspruch 10.

## Claims

1. A method for controlling or regulating a cab suspension and a chassis suspension (5) of a motor vehicle (1),
the control or regulation of the cab suspension depending on at least one determined item of road information (31) which relates to a road segment (40) lying ahead in the direction of travel of the motor vehicle (1) and being carried out in such a way that, depending on the determined item of road information (31), adaptation of a spring-damper apparatus (4) of the cab suspension is carried out,
**characterized**
a) **in that** in a first operating mode, depending on the determined item of road information (31), adaptation only of the spring-damper apparatus (4) of the cab suspension is carried out and no adaptation of a spring-damper apparatus (5) of the chassis suspension of the motor vehicle (1) is carried out; and
b) **in that** in a second operating mode, depending on the determined item of road information (31), both adaptation of the spring-damper apparatus (4) of the cab suspension and adaptation of the spring-damper apparatus (5) of the chassis suspension of the motor vehicle (1) are carried out;
c) wherein, depending on the determined item of road information (31), it is determined whether the first or second operating mode is selected.

2. The method according to Claim 1, **characterized in that** the adaptation of the spring-damper apparatus (4) is carried out before or at least when the road segment (40) lying ahead is reached.

3. The method according to one of the preceding claims, **characterized in that** the item of road information (31) comprises at least one item of information which permits conclusions to be drawn about a road surface condition, a road surface unevenness (41) and/or an object lying on the road surface.

4. The method according to one of the preceding claims, **characterized in that** if, by using the item of road information (31), it is concluded that there is road surface unevenness (41) lying ahead, the spring-damper device (4) of the cab is sadjustedet to softer damping in order to travel over the road surface unevenness (41).

5. The method according to one of the preceding claims, **characterized**
a) **in that** the item of road information (31) comprises at least information which allows conclusions to be drawn about a curve (43) and/or curve course; and
b) **in that** if, by using the item of road information (31), it is concluded that there is a curve (43) in the road segment (40) lying ahead, by using the spring-damper device (4) when travelling through the curve (43), banking (38) of the cab is adjusted to reduce a centrifugal force occurring when cornering.

6. The method according to Claim 5, **characterized in that** an angle of inclination of the banking (38) is adjusted, depending on a determined curve radius of the curve (43) .

7. The method according to Claim 1, **characterized**
a) **in that** depending on the determined item of road information (31), a value which allows conclusions to be drawn about an extent of road surface unevenness (41) on the road segment (40) lying ahead is determined, and
b) **in that** if the determined value exceeds a predetermined threshold value, the second operating mode is selected and, if the determined value does not exceed the predetermined threshold value, the first operating mode is selected.

8. The method according to one of the preceding claims, **characterized in that** in the event of a side wind, banking of the cab (2) is adjusted in such a way that the cab is tilted transversely with respect to the direction of travel, counter to the wind direction.

9. The method according to one of the preceding claims, **characterized in that** the at least one determined item of road information which relates to a road segment lying ahead in the direction of travel of the motor vehicle is detected by means of at least one of the following devices: a road map information system, a navigation system and/or a sensor device which is designed to detect a road course (40) lying ahead in the direction of travel of the motor vehicle (1), e.g. a 3D camera system (3) or a laser system.

10. A device (10) for controlling or regulating a cab suspension of a motor vehicle (1), wherein the device (10) is designed to carry out the method according to one of the preceding claims.

11. A motor vehicle (1), in particular a utility vehicle, having a device according to Claim 10.

## Revendications

1. Procédé de commande ou de réglage d'une suspension de cabine de conducteur et d'un support de châssis (5) d'un véhicule automobile (1),
dans lequel la commande ou le réglage de la suspension de cabine du conducteur est effectué en fonction d'au moins une information de route déterminée (31) qui se rapporte à un tronçon de route (40) situé vers l'avant dans la direction de déplacement du véhicule automobile (1), de manière à ce qu'un dispositif amortisseur à ressort (4) de la suspension de cabine de conducteur soit adapté en fonction de l'information de route déterminée (31), **caractérisé**
a) **en ce que**, dans un premier mode de fonctionnement, seul le dispositif amortisseur à ressort (4) de la suspension de cabine de conducteur est adapté en fonction de l'information de route déterminée (31) et en ce qu'aucune adaptation d'un dispositif amortisseur à ressort (5) du support de châssis du véhicule automobile (1) n'est effectuée ; et
b) **en ce que**, dans un deuxième mode de fonctionnement, une adaptation du dispositif amortisseur à ressort (4) de la suspension de cabine de conducteur et du dispositif amortisseur à ressort (5) du support de châssis du véhicule automobile (1) est effectuée en fonction de l'information de route déterminée (31) ;
c) dans lequel, en fonction de l'information de route déterminée (31), il est déterminé si le premier ou le deuxième mode de fonctionnement est sélectionné.

2. Procédé selon la revendication 1, **caractérisé en ce que** l'adaptation du dispositif amortisseur à ressort (4) est effectuée avant que le tronçon de route (40) situé vers l'avant soit atteint ou au moins au moment où il est atteint.

3. Procédé selon l'une des revendications précédentes, **caractérisé en ce que** l'information de route (31) comprend au moins une information indiquant un état de surface de la route, une inégalité de la route (41) et/ou un objet situé sur la surface de la route.

4. Procédé selon l'une des revendications précédentes, **caractérisé en ce que**, s'il est déterminé sur la base de l'information de route (31) qu'une inégalité de route (41) précédente est présente, l'appareil amortisseur à ressort (4) de la cabine est réglé sur un amortissement plus doux pour franchir l'inégalité de route (41).

5. Procédé selon l'une des revendications précédentes, **caractérisé**
a) **en ce que** l'information de route (31) comprend au moins une information indicatrice d'un virage (43) et/ou d'un parcours en virage ; et
b) **en ce que**, dans le cas où il est établi sur la base de l'information de route (31) qu'un virage (43) est présent dans le tronçon de route précédent (40), une inclinaison transversale (38) de la cabine du conducteur est réglée par l'intermédiaire de l'appareil amortisseur à ressort (4) pendant que le virage (43) est parcouru afin de réduire une force centrifuge se produisant lors d'un déplacement en virage.

6. Procédé selon la revendication 5, **caractérisé en ce qu'**un angle d'inclinaison de la pente transversale (38) est réglé en fonction d'un rayon de virage déterminé du virage (43) .

7. Procédé selon la revendication 1, **caractérisé**
a) **en ce que**, en fonction de l'information de route (31) déterminée, on détermine une valeur qui indique une mesure d'une inégalité de route (41) sur le tronçon de route précédent (40), et
b) **en ce que**, si la valeur déterminée dépasse une valeur de seuil prédéterminée, le deuxième mode de fonctionnement est sélectionné et si la valeur déterminée ne dépasse pas la valeur de seuil prédéterminée, le premier mode de fonctionnement est sélectionné.

8. Procédé selon l'une des revendications précédentes, **caractérisé en ce qu'**une inclinaison transversale de la cabine de conducteur (2) est réglée en cas de vent de travers de manière à ce que la cabine du conducteur s'incline transversalement à la direction du déplacement et en sens opposé à la direction du vent.

9. Procédé selon l'une des revendications précédentes, **caractérisé en ce que** ladite au moins une information de route déterminée se rapportant à un tronçon de route vers l'avant dans la direction de déplacement du véhicule automobile est détectée au moyen d'au moins l'un des dispositifs suivants :
un système d'information de cartes routières, un système de navigation et/ou un dispositif de détection conçu pour détecter une route (40) située vers l'avant du véhicule automobile (1), par exemple un système de caméras 3D (3) ou un système à laser.

10. Dispositif (10) de commande ou de réglage d'une suspension de cabine de conducteur d'un véhicule automobile (1),
dans lequel le dispositif (10) est conçu pour mettre en oeuvre le procédé selon l'une des revendications précédentes.

11. Véhicule automobile (1), en particulier véhicule utilitaire, comportant un dispositif selon la revendication 10.
